# EUROPÄISCHE PATENTSCHRIFT

(11) **EP 0 853 570 B1**
(45) Veröffentlichungstag und Bekanntmachung des Hinweises auf die Patenterteilung: **06.03.2002**
(21) Anmeldenummer: 96934611.3
(22) Anmeldetag: 10.10.1996
(51) Int. Cl.: B60T 13/66

(54) **ELEKTRONISCH REGELBARES BREMSBETÄTIGUNGSSYSTEM**
ELECTRONICALLY CONTROLLABLE BRAKE OPERATING SYSTEM
SYSTEME D'ACTIONNEMENT DE FREIN A REGULATION ELECTRONIQUE

(30) Priorität: 18.10.1995 DE 19538794
(43) Veröffentlichungstag der Anmeldung: 22.07.1998
(73) Patentinhaber: Continental Teves AG & Co. oHG, 60488 Frankfurt (DE)
(72) Erfinder: FEIGEL, Hans-Jörg, D-61191 Rosbach (DE); RÜFFER, Manfred, D-65843 Sulzbach (DE); SCHIEL, Lothar, D-65719 Hofheim (DE)
(86) Internationale Anmeldenummer: EP9604398
(87) Internationale Veröffentlichungsnummer: WO9714593

(56) Entgegenhaltungen:
- EP-A- 0 413 949
- EP-A- 0 420 484
- DE-A- 3 124 755
- DE-A- 3 424 912
- DE-A- 3 922 861
- DE-A- 3 939 091
- US-A- 5 234 263
- US-A- 5 258 912
- US-A- 5 454 631

## Beschreibung

Die Erfindung betrifft ein elektronisch regelbares Bremsbetätigngssystem nach dem Oberbegriff des Patentanspruchs 1.

Ein derartiges Bremsbetätigungssystem ist zum Beispiel aus der DE-0S 3124755A1 bekannt. Die Druckquelle des vorbekannten Bremsbetätigungssystems besteht aus einer Pumpe, einem hydraulischen Speicher sowie einem Druckmittelvorratsbehälter, wobei die Funktion der Trenn-, sowie der Einlaß- und Auslaßventile von Mehrstellungs- bzw. 4/4-wegeventilen erfüllt wird, deren Eingangsanschlüsse mit der Druckseite der Pumpe bzw. dem Speicher, dem Druckmittelvorratsbehälter sowie je einem Druckraum des zweikreisigen Hauptbremszylinders verbunden sind, während an die Ausgangsanschlüsse die Radbremsen angeschlossen sind. Bei einer Fremdbremsung bzw. einem Druckaufbau wird das 4/4-Wegeventil in seine erste Schaltstellung umgeschaltet, in der die Radbremsen vom Hauptbremszylinder getrennt und mit der Druckquelle verbunden sind. Eine Druckhaltephase wird in einer zweiten Schaltstellung realisiert, in der die Radbremsen so- wohl vom Hauptbremszylinder als auch von der Druckwelle getrennt sind, während ein Druckabbau in einer dritten Schaltstellung erfolgt, in der eine Verbindung zwischen den Radbremsen und dem drucklosen Druckmittelvorratsbehälter hergestellt wird.

Abgesehen von mit dem Einsatz der aufwendigen Druckquelle verbundenen, verhältnismäßig hohen Kosten ist bei dem vorbekannten Bremsbetätigungssystem die ungünstige Bremsdruckdosierbarkeit, insbesondere im Bereich niedrigerer Drücke, die auf die Verwendung der 4/4-Wegeventile zurückzuführen ist.

Es ist daher Aufgabe der vorliegenden Erfindung, ein elektronisch regelbares Bremsbetätigungssystem der eingangs genannten Gattung dahingehend zu verbessern, daß insbesondere die bei einer ABS-Regelung genannten Nachteile weitgehendst vermieden werden. Insbesondere soll eine erhebliche Verbesserung der Bremsdruckdosierbarkeit im unteren Druckbereich bei gleichzeitiger Senkung des Gesamtaufwandes erreicht werden.

Diese Aufgabe wird erfindungsgemäß dadurch gelöst, daß die Druckquelle als mindestens eine kontinuierlich verstellbare Kolben-Zylinder-Einheit ausgebildet ist, deren Druckraum sowohl mit dem Hauptbremszylinder als auch mit den Radbremsen verbindbar ist. Durch diese Maßnahmen wird erreicht, daß Normalbremsvorgänge analog mittels der Kolbenzylindereinheit durchgeführt werden, während die Druckhaltephasen durch Schalten der stromlos offenen (S0-) Einlaßventile energiesparend realisiert werden. Eine Erhöhung der Bremsdruckaufbaugeschwindigkeit kann durch verzögertes Schalten der Trennventile erreicht werden.

Vorteilhafte Weiterbildungen des erfindungsgemäßen Bremsbetätigungssystems sind den Unteransprüchen 2 bis 19 entnehmbar.

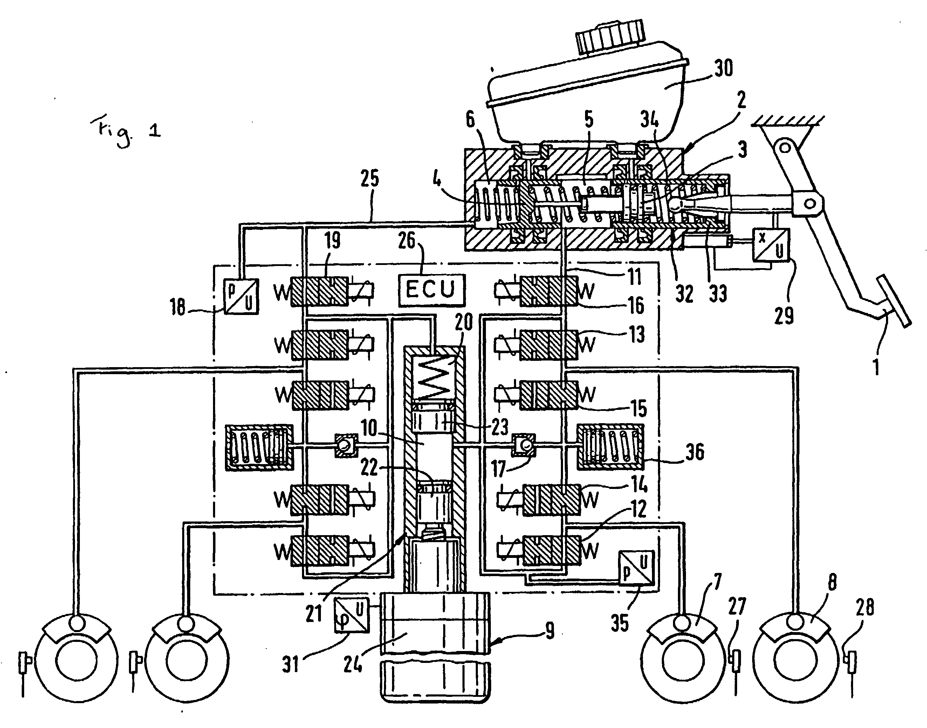

Die Erfindung wird in der nachfolgenden Beschreibung von drei Ausführungsbeispielen unter Bezugnahme auf die beiliegende Zeichnung näher erläutert. In der Zeichnung zeigen die Fig. 1,2 und 3 Schaltbilder einer ersten, einer zweiten sowie einer dritten Ausführung des erfindungsgemäßen Bremsbetätigungssystems.

Das in der Zeichnung dargestellte, elektronisch regelbare Bremsbetätigungssystem nach der Erfindung besteht aus einem mittels eines Betätigungspedals 1 betätigbaren, zweikreisigen Hauptbremszylinder bzw. Tandemhauptzylinder 2, der durch zwei Kolben 3,4 begrenzte, voneinander getrennte Druckräume 5,6 aufweist, die mit einem drucklosen Druckmittelvorratsbehälter 30 in Verbindung stehen. Der erste Druckraum (Primärdruckraum) 5 steht mittels einer absperrbaren ersten hydraulischen Leitung 11 in Verbindung mit einem ersten Druckraum 10 einer vorzugsweise zweikreisig ausgeführten Kolben-Zylinder-Einheit 9, an den beispielsweise eine der Vorderachse zugeordnete Radbremse 7 sowie eine der Hinterachse zugeordnete Radbremse 8 angeschlossen sind. Das Absperren der Leitung 11 erfolgt mittels eines ersten Trennventils 16, während in den Leistungsabschnitten zwischen dem Druckraum 10 und den Radbremsen 7,8 je ein elektromagnetisch betätigbares, vorzugsweise stromlos offenes (S0) Einlaßventil 12,13 eingefügt ist. Außerdem ist an den Druckraum 10 über ein zum Druckraum 10 hin öffnendes Rückschlagventil 17 ein Niederdruckspeicher 36 angeschlossen, der über je ein elektromagnetisch betätigbares, vorzugsweise stromlos geschlossenes (SG) Auslaßventil 14,15 mit den Radbremsen 7,8 verbindbar ist.

Der zweite Druckraum 6 des Hauptbremszylinders 2, an den ein Drucksensor 18 angeschlossen sein kann, ist über eine mittels eines zweiten Trennventils 19 absperrbare hydraulische Leitung 25 einerseits mit einem zweiten Druckraum 20 der Kolben-Zylinder-Einheit 9 und andererseits mit dem anderen, näher nicht bezeichneten Radbremsenpaar verbindbar. Da der Aufbau der an dem zweiten Druckraum 6 des Hauptbremszylinders 2 angeschlossenen hydraulischen Schaltung identisch der im Zusammenhang mit dem ersten Bremskreis 11 erläuterten Schaltung entspricht, braucht er im nachfolgenden Text nicht mehr erörtert zu werden.

Die vorhin erwähnte, als Fremddruckquelle dienende Kolben-Zylinder-Einheit 9 besteht ihrerseits aus einem hydraulischen Zylinder 21 in Tandemausführung, in dem zwei die vorhin erwähnten Druckräume 10,20 begrenzende Kolben 22,23 verschiebbar geführt sind, wobei der erste Kolben 22 durch einen vorzugsweise reversierbaren Gleichstrommotor 24 antreibbar ist.

Der gemeinsamen Ansteuerung des Gleichstrommotors 24 sowie der Elektromagnetventile 12 bis 15, 16 und 19 dient eine elektronische Steuereinheit 26, der als Eingangssignale die Ausgangssignale eines mit dem Betätigungspedal 1 zusammenwirkenden Betätigungswegsensors 29 sowie des vorhin erwähnten Drucksensors 18 zugeführt werden und die eine Fahrerverzögerungswunscherkennung ermöglichen. Zur Fahrerverzögerungswunscherkennung können jedoch auch andere Mittel, beispielsweise ein die Betätigungskraft am Betätigungspedal 1 sensierender Kraftsensor verwendet werden. Als weitere Eingangsgrößen werden der elektronischen Steuereinheit 26 die der Geschwindigkeit des Fahrzeuges entprechenden Ausgangssignale von Radsensoren zugeführt, wobei die den Radbremsen 7,8 zugeordneten Radsensoren mit den Bezugszeichen 27,28 versehen sind. Außerdem ist ein Drehwinkel-Spannungswandler 31 vorgesehen, der die Winkelposition des Rotors des Gleichstrommotors 24 erfaßt und somit ein indirektes Erfassen der Position der Kolben 22,23 der Kolben-Zylinder-Einheit 9 ermöglicht.

Wie Fig. 1 schließlich erkennen läßt, ist wirkungsmäßig zwischen dem Betätigungspedal 1 und dem Hauptbremszylinder 2 ein Simulator 32 angeordnet, der durch eine mit dem Betätigungspedal 1 in kraftübertragender Verbindung stehende, einen Bestandteil des ersten Hauptzylinderkolbens 3 bildende Hülse 33 sowie eine innerhalb der Hülse 33 angeordnete Simulatorfeder 34 gebildet ist. Die Simulatorfeder 34 stützt sich dabei einerseits am Kolben 3 und andererseits an der Hülse 33 axial ab.

Das in Fig. 1 der Zeichnung dargestellte Bremsbetätigungssystem funktioniert wie folgt: Wird ein Bremsvorgang durch Niederdrücken des Bremsbetätigungspedals 1 eingeleitet, so wird der Betätigungszustand vom Betätigungswegsensor 27 erkannt und der elektronischen Steuereinheit 26 mitgeteilt, deren Steuersignale ein Umschalten der Ventile 16 und 19 und dadurch eine Trennung der Hauptzylinderdruckräume 5,6 von den Druckräumen 10,20 der Kolben-Zylinder-Einheit 9 bewirken. Durch den Drucksensor 18 erfolgt eine zweite Meldung des Fahrerverzögerungswunsches bzw. eine zweite Vorgabe eines Ist-Druckwertes an die elektronische Steuereinheit 26, die Ansteuersignale für den Gleichstrommotor 24 erzeugt, der ein Verschieben der Kolben 22,23 in Betätigungsrichtung und somit eine Druckerhöhung in den Radbremsen 7,8,-,- einleitet. Der Soll- und Istwert-Abgleich erfolgt über einen an den ersten Druckraum 10 der Kolben-Zylinder-Einheit 9 angeschlossenen zweiten Drucksensor 35. Das für den Fahrer gewöhnliche, bei einem Bremsvorgang spürbare Pedalgefühl wird durch Zusammendrücken der Simulatorfeder 34 gewährleistet.

Ein Druckabbau erfolgt durch zurückfahren der Kolben 22,23 unter Umständen durch aktive Drehrichtungsumkehr des Gleichstrommotors 24.

In einem ABS-Regelfall kann ein Überschußdruckmittelvolumen in den Niederdruckspeichern 36, gespeichert werden. An dem zu regelnden Rad erfolgt eine Druckänderung über die Ein- und Auslaßventile 12,13 bzw. 14,15, wobei der Niederdruckspeicher 36 über das Rückschlagventil 17 von der zurücklaufenden Kolben-Zylinder-Einheit 9 entleert wird.

Bei einer Antriebsschlupf- oder einer Fahrstabilitätsregelung werden die Trennventile 16,19 geschlossen, wobei der erforderliche Bremsdruck von der Kolben-Zylinder-Einheit 9 erzeugt wird. Eine Druckhaltephase wird durch Umschalten des (S0-) Einlaßventils 12 bzw. 13 erreicht. Durch Umschalten des stromlos geschlossenen (SG-) Auslaßventils 14,15 oder durch Schalten des geschlossenen (SG-) Einlaßventils 12,13 mit gleichzeitiger Senkung des dem Gleichstrommotor 24 zugeführten Stromes kann ein Druckabbau durchgeführt werden. Das vorhin erwähnte Rückschlagventil 17 ermöglicht ein Zurückströmen des Druckmittels in Richtung der Kolben-Zylinder-Einheit 9 nach oder sogar während der Regelung.

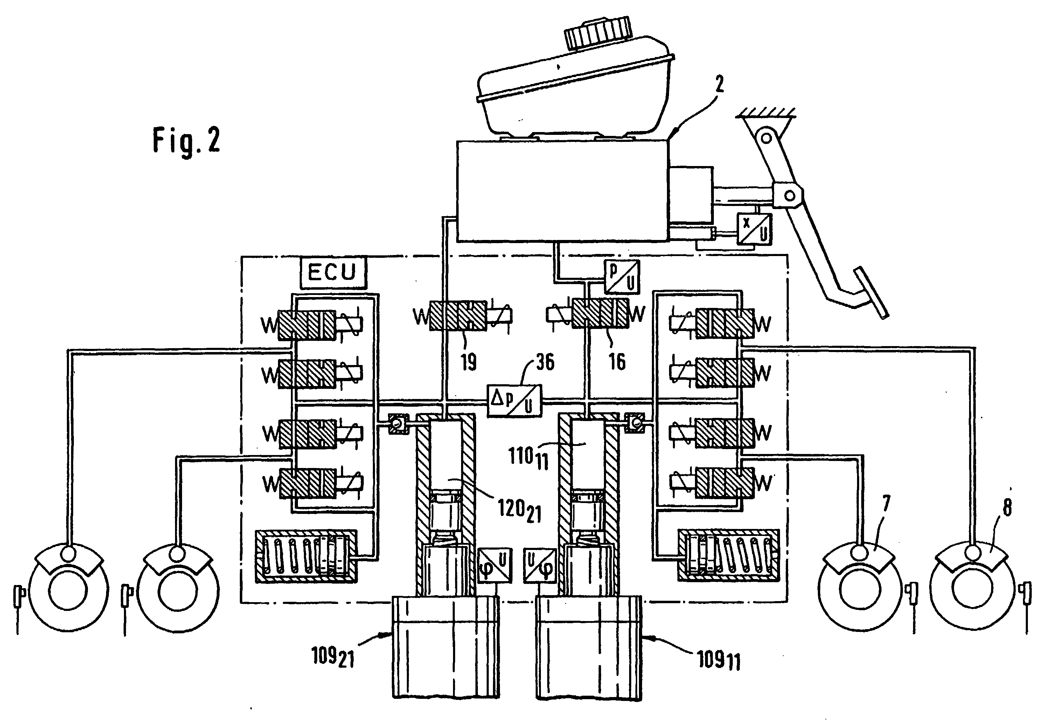

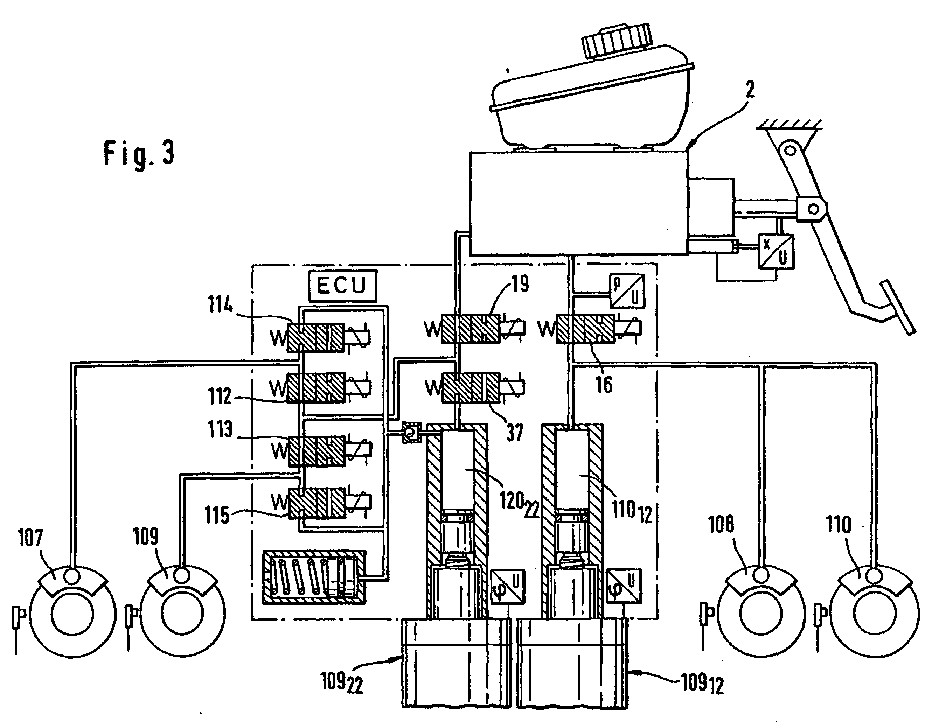

Bei der in Fig. 2 und 3 gezeigten zweiten und dritten Ausführung des Erfindungsgegenstandes finden anstelle der im Zusammenhang mit Fig. 1 erwähnten zweikreisigen Kolben-Zylinder-Einheit 9 zwei einkreisige Kolben-Zylinder-Einheiten 109_{**11**}, 109_{**21**}, 109_{**12**}, 109_{**22**} Verwendung, deren Druckräume 110_{**11**}, 110_{**12**} bzw. 120_{**21**}, 120_{**22**} einerseits über die Trennventile 16,19 an die Druckräume 5,6 des Hauptbremszylinders 2 angeschlossen sind und andererseits mit je einem Radbremsenpaar in Verbindung stehen.

Die Aufteilung der Bremskreise bei der in Fig. 2 gezeigten zweiten Ausführung entspricht der Bremskreisaufteilung der in Fig. 1 dargestellten ersten Ausführung, so daß mit jedem Druckraum 110_{**11**}, 120_{**21**} der Kolben-Zylinder-Einheit 109_{**11**}, 109_{**21**}, je eine der Vorderachse und der Hinterachse zugeordnete Radbremse 7,8,-,- zusammenwirkt. Zwischen den beiden Druckräumen 110_{**11**}, 120_{**21**} ist dabei vorzugsweise ein Differenzdruck-Spannungswandler 36 angeschlossen.

Die Bremskreisaufteilung bei der in Fig. 3 dargestellten dritten Ausführung ist vorzugsweise derart getroffen, daß an den Druckraum 110_{**12**} der ersten Kolben-Zylinder-Einheit 109_{**12**} die der Hinterachse des Fahrzeuges zugeordneten Radbremsen 108,110 angeschlossen sind, deren Verbindung mit dem Druckraum 110_{**12**} ohne Zwischenschaltung der Ein- und Auslaßventile erfolgt. An den Druckraum 120_{**22**} der zweiten Kolben-Zylinder-Einheit 109_{**22**} sind über je ein Ein-(112,113) und ein Auslaßventil (114,115) die der Vorderachse zugeordneten Radbremsen 107,109 angeschlossen (Schwarz-Weiß-Aufteilung). Eine andere (Diagonal-) Bremskreisaufteilung wird durch die Verwendung eines vorzugsweise zwischen dem zweiten Trennventil und dem Druckraum 120_{**22**} der zweiten Kolben-Zylinder-Einheit 109_{**22**} eingefügten, elektromagnetisch betätigbaren, stromlos geschlossenen (SG-) Ventils 37 ermöglicht.

Das beanspruchte Bremssystem ist auch für die Rekuperation von Bremsenergie in Elektrofahrzeugen geeignet. Hierbei erfolgt die Ansteuerung der Kolben-Zylinder-Einheit im Verzögerungsregelkreis, der auch die Wirkung des Bremsmoments seitens des Fahrzeugantriebs berücksichtigt. Bei Überschreiten des auf die Vorderachse übertragbaren Gesamtmomentes werden die SO-Ventile geschlossen und der Bremsdruck an der Hinterachse bis zum Erreichen der optimalen Bremskraftverteilung erhöht.

## Patentansprüche

1. Elektronisch regelbares Bremsbestätigungssystem für Kraftfahrzeuge, mit einem Hauptbremszylinder (2), mit einem mit dem Hauptbremszylinder zusammenwirkenden Simulator, mit einer durch eine elektronische Steuereinheit ansteuerbaren Druckquelle, mit deren Druck Radbremsen (7,8) des Fahrzeuges beaufschlagbar sind, die über mindestens eine mittels Trennventile (16) absperrbare hydraulische Verbindung mit dem Hauptbremszylinder verbindbar sind, mit einer Einrichtung zur Erkennung des Fahrerverzögerungswunsches, mit je einem den Radbremsen vorgeschalteten Ein- und Auslaßventil (12, 13, 14, 15), sowie mit das Drehverhalten der Fahrzeugräder erfassenden Radsensoren (27, 28), **dadurch gekennzeichnet, daß** die Druckquelle als mindestens eine kontinuierlich verstellbare Kolben-Zylinder-Einheit (9,109_{**11**},109_{**21**}, 109_{**12**}, 109_{**22**}) ausgebildet ist, deren Druckräume (10,20,110_{**11**},120_{**21**},110_{**12**},120_{**22**}) sowohl mit dem Hauptbremszylinder (2) als auch mit den Radbremsen (7,8,108,110,107,109) verbindbar ist.

2. Elektronisch regelbares Bremsbetätigungssystem nach Anspruch 1, **dadurch gekennzeichnet, daß** die Kolben-Zylinder-Einheit (9) zweikreisig ausgeführt ist, wobei an den ersten Druckraum (10) eine einer ersten Fahrzeugachse zugeordnete Radbremse (7) sowie eine einer zweiten Fahrzeugachse zugeordnete Radbremse (8) und an den zweiten Druckraum (20) die andere, der ersten und der zweiten Fahrzeugachse zugeordnete Radbremse angeschlossen sind.

3. Elektronisch regelbares Bremsbetätigungssystem nach Anspruch 1, **dadurch gekennzeichnet, daß** die Druckquelle durch zwei einkreisige Kolben-Zylinder-Einheiten (109_{**11**},109_{**21**}) gebildet ist, wobei an den Druckraum (110_{**11**}) der ersten Kolben-Zylinder-Einheit (109_{**11**}) eine einer ersten Fahrzeugachse zugeordnete Radbremse (7_{**1**}) sowie eine einer zweiten Fahrzeugachse zugeordnete Radbremse (7_{**1**}) und an den Druckraum (120_{**21**}) der zweiten Kolben-Zylinder-Einheit (109_{**21**}) die andere der ersten und der zweiten Fahrzeugachse zugeordnete Radbremse angeschlossen sind.

4. Elektronisch regelbares Bremsbetätigungssystem nach Anspruch 1, **dadurch gekennzeichnet, daß** die Kolben-Zylinder-Einheit zweikreisig ausgeführt ist, wobei an den ersten Druckraum die einer Fahrzeugachse zugeordneten Radbremsen und an den zweiten Druckraum die der anderen Fahrzeugachse zugeordneten Radbremsen angeschlossen sind.

5. Elektronisch regelbares Bremsbetätigungssystem nach Anspruch 1, **dadurch gekennzeichnet, daß** die Druckquelle als zwei kontinuierlich verstellbare, einkreisige Kolben-Zylinder-Einheiten (109_{**12**},109_{**22**}) ausgebildet ist, an deren Druckräume (10_{**12**},120_{**22**}) je einer Fahrzeugachse zugeordnete Radbremsen (109,110 bzw. 107,108) angeschlossen sind, wobei in der Verbindung zwischen den der ersten Fahrzeugachse zugeordneten Radbremsen (109,110) und der ersten Kolbenzylindereinheit (109_{**12**}) ein stromlos geschlossenes (SG-) Ventil (37) eingefügt ist, während die Verbindung zwischen den der anderen Fahrzeugachse zugeordneten Radbremsen (107,108) ohne Zwischenschaltung der Ein- und Auslaßventile erfolgt.

6. Elektronisch regelbares Bremsbetätigungssystem nach einem der Ansprüche 1 bis 5, **dadurch gekennzeichnet, daß** die Kolben-Zylinder-Einheit durch einen Hydraulikzylinder gebildet ist, dessen Kolben mittels eines reversierbaren Gleichstrommotors betätigbar ist.

7. Elektronisch regelbares Bremsbetätigungssystem nach einem der Ansprüche 1 bis 6, **dadurch gekennzeichnet, daß** die Kolben-Zylinder-Einheit durch einen Hydraulikzylinder gebildet ist, dessen Kolben mittels eines ventilgesteuerten, pneumatisch bzw. hydraulisch ansteuerbaren Linearantriebs betätigbar ist.

8. Elektronisch regelbares Bremsbetätigungssystem nach einem der Ansprüche 1 bis 7, **dadurch gekennzeichnet, daß** der Druckraum (10) der Kolben-Zylinder-Einheit (9) über ein zum Druckraum (10) hin öffnendes Rückschlagventil (17) mit einem Niederdruckspeicher (36) in Verbindung steht, mit dem die Radbremse (7,8) mittels des Auslaßventils (14,15) verbindbar ist.

9. Elektronisch regelbares Bremsbetätigungssystem nach einem der vorhergehenden Ansprüche, **dadurch gekennzeichnet, daß** zwischen der Kolben-Zylinder-Einheit und dem Einlaßventil ein Druckspeicher angeordnet ist.

10. Elektronisch regelbares Bremsbetätigungssystem nach einem der vorhergehenden Ansprüche, wobei der Hauptbremszylinder mittels eines Betätigungspedals betätigbar ist, **dadurch gekennzeichnet, daß** die Einrichtung zur Erkennung des Fahrerverzögerungswunsches durch die Kombination eines den Betätigungsweg des Betätigungspedals (1) erfassenden wegsensors (29) mit einem den im Hauptbremszylinder (2) entstehenden hydraulischen Druck erfassenden Drucksensor (18) gebildet ist.

11. Elektronisch regelbares Bremsbetätigungssystem nach einem der vorhergehenden Ansprüche 1 bis 9, wobei der Hauptbremszylinder mittels eines Betätigungspedals betätigbar ist und der Simulator durch einen federnd vorgespannten hydraulischen Simulatorkolben gebildet ist, **dadurch gekennzeichnet, daß** die Einrichtung zur Erkennung des Fahrerverzögerungswunsches durch die Kombination eines den Betätigungsweg des Betätigungspedals (1) erfassenden ersten Wegsensors mit einem den Weg des Simulatorkolbens erfassenden zweiten Wegsensor gebildet ist.

12. Elektronisch regelbares Bremsbetätigungssystem nach einem der vorhergehenden Ansprüche 1 bis 10, **dadurch gekennzeichnet, daß** der Simulator (32) durch eine wirkungsmäßig zwischen dem Betätigungspedal (1) und dem Hauptbremszylinder (2) angeordnete Druckfeder (34) gebildet ist.

13. Elektronisch regelbares Bremsbetätigungssystem nach einem der vorhergehenden Ansprüche 1 bis 9, **dadurch gekennzeichnet, daß** die Einrichtung zur Erkennung des Fahrerverzögerungswunsches durch zwei an die Druckräume des Hauptbremszylinders angeschlossenen Drucksensoren gebildet ist.

14. Elektronisch regelbares Bremsbetätigungssystem nach einem der vorhergehenden Ansprüche, **dadurch gekennzeichnet, daß** Mittel (31) zum Erfassen der Position der Kolben (22,-) der Kolben-Zylinder-Einheit (9) vorgesehen sind.

15. Elektronisch regelbares Bremsbetätigungssystem nach Anspruch 3, **dadurch gekennzeichnet, daß** zwischen denDruckräumen (110_{**12**},120_{**21**}) der Kolben-Zylinder-Einheiten (109_{**11**},109_{**21**}) ein Differenzdruck-Spannungswandler (36) angeordnet ist.

16. Elektronisch regelbares Bremsbetätigungssystem nach einem der vorhergehenden Ansprüche, **dadurch gekennzeichnet, daß** ein den von der Kolben-Zylinder-Einheit aufgebrachten hydraulischen Druck erfassender Drucksensor vorgesehen ist.

17. Elektronisch regelbares Bremsbetätigungssystem nach einem der Ansprüche 7 bis 16, **dadurch gekennzeichnet, daß** ein den Weg des Niederdruckspeicherkolbens erfassender Wegsensor bzw. -schalter vorgesehen ist.

18. Elektronisch regelbares Bremsbetätigungssystem nach einem der vorhergehenden Ansprüche, **dadurch gekennzeichnet, daß** zwischen dem Hauptbremszylinder und der Kolben-Zylinder-Einheit ein Druckschalter angeordnet ist.

## Claims

1. Electronically controllable brake actuation system for automotive vehicles which includes a master brake cylinder, a simulator interacting with the master brake cylinder, a pressure source actuatable by an electronic control unit and by which wheel brakes (7, 8) of the vehicle are pressurizable, the wheel brakes being connectable to the master brake cylinder by at least one hydraulic connection that is closable by separating valves (16), a device for the identification of the driver's wish for deceleration, each one inlet and outlet valve (12, 13, 14, 15) connected upstream of the wheel brakes, and wheel sensors (27, 28) sensing the rotational behavior of the vehicle wheels,
**characterized in that** the pressure source is configured as at least one continuously adjustable piston-and-cylinder assembly (9, 109₁₁, 109₂₁, 109₁₂, 109₂₂) having pressure chambers (10, 20, 110₁₁, 120₂₁, 110₁₂, 120₂₂) which are connectable to the master brake cylinder (2) and the wheel brakes (7, 8, 108, 110, 107, 109).

2. Electronically controllable brake actuation system as claimed in claim 1,
**characterized in that** the piston-and-cylinder assembly (9) has a dual-circuit design, wherein a wheel brake (7) associated with a first vehicle axle and a wheel brake (8) associated with a second vehicle axle are connected to the first pressure chamber (10), and the other wheel brake associated with the first and the second vehicle axle is connected to the second pressure chamber (20).

3. Electronically controllable brake actuation system as claimed in claim 1,
**characterized in that** the pressure source is provided by two one-circuit piston-and-cylinder assemblies (109₁₁, 109₂₁), wherein a wheel brake (7₁) associated with a first vehicle axle and a wheel brake (7₁) associated with a second vehicle axle are connected to the pressure chamber (110₁₁) of the first piston-and-cylinder assembly (109₁₁), and the other wheel brake associated with the first and the second vehicle axle is connected to the pressure chamber (120₂₁) of the second piston-and-cylinder assembly (109₂₁).

4. Electronically controllable brake actuation system as claimed in claim 1,
**characterized in that** the piston-and cylinder assembly has a dual-circuit design, and the wheel brakes associated with one vehicle axle are connected to the first pressure chamber and the wheel brakes associated with the other vehicle axle are connected to the second pressure chamber.

5. Electronically controllable brake actuation system as claimed in claim 1,
**characterized in that** the pressure source is configured as two continuously adjustable one-circuit piston-and-cylinder assemblies (109₁₂, 109₂₂) having pressure chambers (10₁₂, 120₂₂) to which wheel brakes (109, 110 and 107, 108, respectively) associated with each one vehicle axle are connected, wherein a normally closed (NC) valve (37) is inserted into the connection between the wheel brakes (109, 110) associated with the first vehicle axle and the first piston-and-cylinder assembly (109₁₂), whereas the connection between the wheel brakes (107, 108) associated with the other vehicle axle is without the intermediary of the inlet and outlet valves.

6. Electronically controllable brake actuation system as claimed in any one of claims 1 to 5,
**characterized in that** the piston-and-cylinder assembly is provided by a hydraulic cylinder having a piston which is operable by a reversible directcurrent motor.

7. Electronically controllable brake actuation system as claimed in any one of claims 1 to 6,
**characterized in that** the piston-and-cylinder assembly is provided by a hydraulic cylinder having a piston which is operable by a valve-controlled, pneumatically or hydraulically drivable linear drive.

8. Electronically controllable brake actuation system as claimed in any one of claims 1 to 7,
**characterized in that** the pressure chamber (10) of the piston-and-cylinder assembly (9) is connected to a low-pressure reservoir (36) by way of a non-return valve (17) which opens towards the pressure chamber (10), and the low-pressure reservoir is connectable to the wheel brake (7, 8) by way of the outlet valve (14, 15).

9. Electronically controllable brake actuation system as claimed in any one of the preceding claims,
**characterized in that** a pressure accumulator is interposed between the piston-and-cylinder assembly and the inlet valve.

10. Electronically controllable brake actuation system as claimed in any one of the preceding claims, wherein the master brake cylinder is operable by an actuating pedal,
**characterized in that** the device for identifying the driver's wish for deceleration is provided by the combination of a travel sensor (29), which senses the actuating travel of the actuating pedal (1), and a pressure sensor (18) which senses the hydraulic pressure that develops in the master brake cylinder (2).

11. Electronically controllable brake actuation system as claimed in any one of the preceding claims 1 to 9, wherein the master brake cylinder is operable by an actuating pedal and the simulator is configured as a resiliently biassed hydraulic simulator piston,
**characterized in that** the device for identifying the driver's wish for deceleration is provided by the combination of a first travel sensor, which senses the actuating travel of the actuating pedal (1), and a second travel sensor which senses the travel of the simulator piston.

12. Electronically controllable brake actuation system as claimed in any one of the preceding claims 1 to 10,
**characterized in that** the simulator (32) is provided by a compression spring (34) which is arranged in terms of effect between the actuating pedal (1) and the master brake cylinder (2).

13. Electronically controllable brake actuation system as claimed in any one of the preceding claims 1 to 9,
**characterized in that** the device for identifying the driver's wish for deceleration is provided by two pressure sensors which are connected to the pressure chambers of the master brake cylinder.

14. Electronically controllable brake actuation system as claimed in any one of the preceding claims,
**characterized in that** a means (31) is provided to sense the position of the pistons (22,-) of the piston-and-cylinder assembly (9).

15. Electronically controllable brake actuation system as claimed in claim 3,
**characterized in that** a differential-pressure/voltage converter (36) is interposed between the pressure chambers (110₁₂, 120₂₁) of the piston-and-cylinder assemblies (109₁₁, 109₂₁).

16. Electronically controllable brake actuation system as claimed in any one of the preceding claims,
**characterized in that** there is provision of a pressure sensor which senses the hydraulic pressure generated by the piston-and-cylinder assembly.

17. Electronically controllable brake actuation system as claimed in any one of claims 7 to 16,
**characterized in that** there is provision of a travel sensor or switch means which senses the travel of the low-pressure accumulator piston.

18. Electronically controllable brake actuation system as claimed in any one of the preceding claims,
**characterized in that** a pressure switch is interposed between the master cylinder and the piston-and-cylinder assembly.

## Revendications

1. Système d'actionnement de frein à régulation électronique pour véhicules automobiles, comportant un cylindre de frein principal (2), comportant un simulateur coopérant avec le cylindre de frein principal, comportant une source de pression qui peut être commandée par une unité de commande électronique, et dont la pression permet de solliciter des freins de roue (7, 8) du véhicule qui peuvent être reliés au cylindre de frein principal par au moins une liaison hydraulique, laquelle peut être fermée au moyen de soupapes de séparation (16), comportant un dispositif de reconnaissance de ce que le conducteur souhaite ralentir, comportant une soupape d'admission et soupape d'échappement (12, 13, 14, 15), montées devant chacun des freins de roue, et comportant des capteurs de roue (27, 28) qui détectent le comportement en rotation des roues du véhicule, **caractérisé en ce que** la source de pression est réalisée en tant qu'au moins une unité à cylindre et piston (9, 109₁₁, 109₂₁, 109₁₂, 109₂₂) réglable en continu, dont les chambres de pression (10, 20, 110₁₁, 120₂₁, 110₁₂, 120₂₂) peuvent être reliées aussi bien au cylindre de frein principal (2) qu'aux freins de roue (7, 8, 108, 110, 107, 109).

2. Système d'actionnement de frein à régulation électronique selon la revendication 1, **caractérisé en ce que** l'unité à cylindre et piston (9) comporte deux circuits, à la première chambre de pression (10) étant relié un frein de roue (7) associé à un premier essieu de véhicule, ainsi qu'un frein de roue (8) associé à un deuxième essieu de véhicule, et à la deuxième chambre de pression (20) étant raccordé l'autre frein de roue associé au premier et au deuxième essieu de roue.

3. Système d'actionnement de frein à régulation électronique selon la revendication 1, **caractérisé en ce que** la source de pression est formée par deux unités à cylindre et piston à un circuit (109₁₁, 109₂₁), à la chambré de pression (110₁₁) de la première unité à cylindre et piston (109₁₁) étant raccordés un frein de roue (7₁) associé au premier essieu de véhicule, ainsi qu'un frein de roue (7₁) associé à un deuxième essieu de roue, et à la chambre de pression (120₂₁) de la deuxième unité à cylindre et piston (109₂₁) étant raccordé l'autre frein de roue associé au premier et au deuxième essieux de véhicule.

4. Système d'actionnement de frein à régulation électronique selon la revendication 1, **caractérisé en ce que** l'unité à cylindre et piston comporte deux circuits, à la première chambre de pression étant raccordés les freins de roue associés à un essieu de véhicule et à la deuxième chambre de pression étant raccordés les freins de roue associés à l'autre essieu de véhicule.

5. Système d'actionnement de frein à régulation électronique selon la revendication 1, **caractérisé en ce que** la source de pression est réalisée en tant que deux unités à cylindre et piston à un circuit (109₁₂, 109₂₂) réglables en continu, à chacune des chambres de pression (10₁₂, 120₂₂) desquelles sont raccordés des freins de roue (109, 110 respectivement 107, 108) associés à un essieu de véhicule, une soupape (37) fermée sans courant étant insérée dans la liaison entre les freins de roue (109, 110) associés au premier essieu de véhicule et la première unité à cylindre et piston (109₁₂), tandis que la liaison entre les freins de roue (107, 108) associés à l'autre essieu de véhicule s'effectue sans interposition des soupapes d'admission et d'échappement.

6. Système d'actionnement de frein à régulation électronique selon l'une des revendications 1 à 5, **caractérisé en ce que** l'unité à cylindre et piston est formée par un vérin hydraulique dont le piston peut être actionné au moyen d'un moteur à courant continu réversible.

7. Système d'actionnement de frein à régulation électronique selon l'une des revendications 1 à 6, **caractérisé en ce que** l'unité à cylindre et piston est formée par un vérin hydraulique dont le piston peut être actionné au moyen d'un dispositif d'entraînement linéaire à commande pneumatique, respectivement hydraulique, commandé par soupape.

8. Système d'actionnement de frein à régulation électronique selon l'une des revendications 1 à 7, **caractérisé en ce que** la chambre de pression (10) de l'unité à cylindre et piston (9) est en liaison, par un clapet de non-retour (17) qui s'ouvre vers la chambre de pression (10), avec un accumulateur à basse pression (36) auquel le frein de roue (7, 8) peut être relié au moyen de la soupape d'échappement (14, 15).

9. Système d'actionnement de frein à régulation électronique selon l'une des revendications précédentes, **caractérisé en ce qu'**un accumulateur de pression est prévu entre l'unité à cylindre et piston et la soupape d'admission.

10. Système d'actionnement de frein à régulation électronique selon l'une des revendications précédentes, dans lequel le cylindre de frein principal peut être actionné au moyen d'une pédale d'actionnement, **caractérisé en ce que** le dispositif de reconnaissance de ce que le conducteur souhaite ralentir est formé par la combinaison d'un capteur de distance (29), détectant la course d'actionnement de la pédale d'actionnement (1), avec un capteur de pression (18) qui détecte la pression hydraulique qui se forme dans le cylindre de frein principal (2).

11. Système d'actionnement de frein à régulation électronique selon l'une des revendications 1 à 9 précédentes, dans lequel le cylindre de frein principal peut être actionné au moyen d'une pédale d'actionnement et le simulateur est formé par un piston simulateur hydraulique précontraint élastiquement, **caractérisé en ce que** le dispositif de reconnaissance de ce que le conducteur souhaite ralentir est formé par la combinaison d'un premier capteur de distance, qui détecte la course d'actionnement de la pédale d'actionnement (1), avec un deuxième capteur de distance qui détecte la course du piston simulateur.

12. Système d'actionnement de frein à régulation électronique selon l'une des revendications 1 à 10 précédentes, **caractérisé en ce que** le simulateur (32) est formé par un ressort de compression (34) disposé de manière à agir entre la pédale d'actionnement (1) et le cylindre de frein principal (2).

13. Système d'actionnement de frein à régulation électronique selon l'une des revendications 1 à 9 précédentes, **caractérisé en ce que** le dispositif de reconnaissance de ce que le conducteur souhaite ralentir est formé par deux capteurs de pression raccordés aux chambres de pression du cylindre de frein principal.

14. Système d'actionnement de frein à régulation électronique selon l'une des revendications précédentes, **caractérisé en ce que** sont prévus des moyens (31) pour détecter la position des pistons (22,-) de l'unité à cylindre et piston (9).

15. Système d'actionnement de frein à régulation électronique selon la revendication 3, **caractérisé en ce qu'**un convertisseur pression différentielle-tension (36) est disposé entre les chambres de pression (110₁₂, 120₂₁) des unités à cylindre et piston (109₁₁, 109₂₁).

16. Système d'actionnement de frein à régulation électronique selon l'une des revendications précédentes, **caractérisé en ce qu'**il est prévu un capteur de pression qui détecte la pression hydraulique appliquée par l'unité à cylindre et piston.

17. Système d'actionnement de frein à régulation électronique selon l'une des revendications 7 à 16, **caractérisé en ce qu'**il est prévu un capteur de distance, respectivement un interrupteur de distance, qui détecte la course du piston de l'accumulateur basse pression.

18. Système d'actionnement de frein à régulation électronique selon l'une des revendications précédentes, **caractérisé en ce qu'**un interrupteur à pression est disposé entre le cylindre de frein principal et l'unité à cylindre et piston.
